(19) Europäisches Patentamt
European Patent Office
Office européen des brevets

(11) EP 3 408 710 B1

(12) **EUROPEAN PATENT SPECIFICATION**

(45) Date of publication and mention
of the grant of the patent:
**15.05.2019 Bulletin 2019/20**

(21) Application number: **17817032.0**

(22) Date of filing: **01.12.2017**

(51) Int Cl.:
***G03H 1/22*** (2006.01)

(86) International application number:
**PCT/GB2017/053636**

(87) International publication number:
**WO 2018/100395 (07.06.2018 Gazette 2018/23)**

(54) **HOLOGRAPHIC PROJECTOR**

HOLOGRAFISCHER PROJEKTOR

PROJECTEUR HOLOGRAPHIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2016 GB 201620540
02.12.2016 GB 201620539
02.12.2016 GB 201620537
02.12.2016 GB 201620538**

(43) Date of publication of application:
**05.12.2018 Bulletin 2018/49**

(73) Proprietor: **Dualitas Ltd.
Milton Keynes MK5 8PG (GB)**

(72) Inventor: **CHRISTMAS, Jamieson
Knowlhill
Milton Keynes MK5 8PG (GB)**

(74) Representative: **Greenaway, Martin William
1a Garforth Place
Knowlhill
Milton Keynes MK5 8PG (GB)**

(56) References cited:
**US-A1- 2009 103 151      US-A1- 2012 008 181
US-A1- 2014 118 806**

- **NAOYA MATSUMOTO ET AL: "High-quality
generation of a multispot pattern using a spatial
light modulator with adaptive feedback", OPTICS
LETTERS, OPTICAL SOCIETY OF AMERICA, vol.
37, no. 15, 1 August 2012 (2012-08-01), pages
3135-3137, XP001577495, ISSN: 0146-9592, DOI:
10.1364/OL.37.003135 [retrieved on 2012-07-23]**

## Description

Field

The present disclosure relates to a projector. More specifically, the present disclosure relates to a holographic projector, holographic projection system, a method of controlling a projection and a method of controlling a holographic projection system. Some embodiments relate to a head-up display and a head-mounted display. The invention relates to a method of controlling image brightness in a holographic projection system. Some embodiments relate to a method of controlling the colour balance of a composite colour holographic projection system. There is also disclosed a method of aligning the holographic reconstruction in a holographic projection system

Background and introduction

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional (replay image) or three-dimensional holographic reconstruction representative of the original object.

Computer-generated holography may numerically simulate the interference process. A computer-generated hologram, "CGH", may be calculated by a technique based on a mathematical transformation such as a Fresnel or Fourier transform. These types of holograms may be referred to as Fresnel or Fourier holograms. A Fourier hologram may be considered a Fourier domain representation of the object or a frequency domain representation of the object. A CGH may also be calculated by coherent ray tracing or a point cloud technique, for example.

A CGH may be encoded on a spatial light modulator, "SLM", arranged to modulate the amplitude and/or phase of incident light. Light modulation may be achieved using electrically-addressable liquid crystals, optically-addressable liquid crystals or micro-mirrors, for example.

The SLM may comprise a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The SLM may be reflective meaning that modulated light is output from the SLM in reflection. The SLM may equally be transmissive meaning that modulated light is output from the SLM is transmission.

A holographic projector may be provided using the described technology. Such projectors have found application in video projectors, head-up displays, "HUD", and head-mounted displays, "HMD", including near-eye devices, for example.

US2012/008181A1 discloses a method of determining an aberration correction for a holographic image display system using a spatial light modulator (SLM) to display a hologram. Corrections needed for a particular projection system are measured using the same system SLM as used to generate the images to provide wavefront sensing holograms.

Naoya Matsumoto et al (XP001577495) discloses a high-quality generation of a uniform multisport pattern (MSP) by using a spatial light modulator with adaptive feedback. The method iteratively updates a computer generated MSP in the optical system.

US2009/103151A1 discloses video image data being converted into spatial frequency information using Fourier transformation. The spatial frequency information is provided to an information display unit and the spatial frequency information is displayed on the information display unit as a phase distribution. Light is irradiated onto the information display unit using a light source and the amount of light that is irradiated by the light source is adjusted based on the video image data. There is disclosed herein an improved holographic projection system.

Summary

Aspects of the invention are defined in the appended independent claim.

Although not claimed, other aspects of a holographic projector are further disclosed.

There is disclosed a method of projection comprising: illuminating a spatial light modulator with light from a light source to form an image on a light receiving surface, wherein the image comprises a primary image region comprising information for a user and a secondary image region; and detecting light from the secondary image region. The method may comprise detecting a property of the light from the secondary image region. The method may comprise changing the image, for example by changing an optical property of the light from the light source in response to the detected property of the light from the secondary image region.

There is provided a method of holographic projection comprising: representing a computer-generated hologram on a spatial light modulator; illuminating the hologram with light from a light source to form an image on a light receiving surface, wherein the image comprises a primary image region comprising information for a user and a secondary image region; and detecting the optical power of the secondary image region. The method may further comprise changing the optical power of the light from the light source in response to the detected optical power of the secondary image region.

The inventors have identified that a closed-loop power feedback system may be provided by the holographic projector of the present disclosure in order to address a problem that the image brightness of the holographic reconstruction is not constant if the amount of image content is varying. The optical power of the secondary image region can be taken as representative of the brightness of the image (for example measured as luminance) and used as a feedback signal to control overall image brightness, in particular if the area of the secondary image region is fixed or the optical power is measured in terms of radiant flux, i.e. normalised to a unit area.

The method may further comprise: representing a second computer-generated hologram on a spatial light modulator; illuminating the second hologram with second light from a light source to form a second image on a light receiving surface, wherein the second image comprises a primary image region comprising information for a user and a secondary image region, and wherein the first image and second image are substantially coincident; and detecting the optical power of the secondary image region of the second image. The method may further comprise changing the optical power of the first and/or second light in response to the detected optical power of the secondary image region of the first and/or second image in order to change respective brightness of the first and/or second image and hence the colour balance of the composite image. This method may be extended to any number of holograms and corresponding images. In some embodiments, a composite colour holographic reconstruction is provided by superimposing red, green and blue images formed from three respective holograms. While the respective primary image regions should be aligned to a sufficient degree to allow a composite image to be perceived by a viewer, the respective secondary image regions need not be aligned (although they may be) and may be spatially distinct.

The inventors have identified that a closed-loop power feedback system may be provided by the composite colour holographic projector of the present disclosure in order to address a problem that the colour balance of the holographic reconstruction is not constant if the relative amounts of single colour image content are varying.

There is further disclosed a method that comprises performing an optical alignment process comprising changing the position of the image on the screen and detecting the optical power of light intercepted travelling to or from the secondary image region at a plurality of positions of the image. The method may further comprise determining the position of the image giving rise to the greatest detected optical power.

The inventors herein disclose a convenient method of aligning the projected image using closed-loop power feedback system.

Reference is made throughout this disclosure to the optical power of image regions of an image. It may be understood that, more specifically, such reference relates to the optical power of light of the image region of the image, more specifically, light emanating from or travelling to the image region. Optical power may be measured by a detector detecting light emanating from the image region or light directed to the image region by intercepting light travelling from or to, respectively the image region. Detected optical power may be used as a feedback signal directly or may be scaled appropriately, for example to normalise for the area of the image region, which may be useful when the image region may vary in area over time, for example. Optical power is understood to refer to the energy of photons travelling to or from the image region in question and is thus measured in terms of W (or $Js^{-1}$) in absolute terms or $Wm^{-2}$ (or $Js^{-1}m^{-2}$) normalised to area. Other scaling factors may be applied to measure optical power, for example in terms of luminance, that is perception weighed, in units of cd or $cdm^{-2}$, as the case may be. Optical power may also be normalised in terms of solid angle and hence be measured as radiant intensity with units of $Js^{-1}m^{-2}sr^{-1}$ or the corresponding perception scaled units $cdm^{-2}sr^{-1}$.

The term "hologram" is used to refer to the *recording* which contains amplitude and/or phase information about the object. The term "holographic reconstruction" is used to refer to the optical *reconstruction* of the object which is formed by illuminating the hologram. The term "replay field" is used to refer to the *plane* in space where the holographic reconstruction is formed. When referring to an image (or image regions), this is generally not coinciding with the whole area of replay field but refers to those areas of the replay field where light of the image (or image region) intersects the replay field, for example is incident on a light receiving surface or screen coincident with the replay field.

The terms "encoding", "writing" or "addressing" are used to describe the process of providing the plurality of pixels of the SLM with a respect plurality of control values which respectively determine the modulation level of each pixel. It may be said that the pixels of the SLM are configured to "display" a light modulation distribution in response to receiving the plurality of control values.

The term "light" is used herein in its broadest sense. Some embodiments are equally applicable to visible light, infrared light and ultraviolet light, and any combination thereof.

Brief description of the drawings

Specific embodiments are described by way of example only with reference to the following figures:

Figure 1 is a schematic showing a reflective SLM producing a holographic reconstruction on a screen;
Figure 2A illustrates a first iteration of an example Gerchberg-Saxton type algorithm;
Figure 2B illustrates the second and subsequent iterations of the example Gerchberg-Saxton type algorithm;
Figure 3 is a schematic of a reflective LCOS SLM;
Figure 4 shows a holographic projection system in accordance with embodiments;

Figure 5 shows a laser driver in accordance with embodiments;

Figure 6 shows a LCOS driver in accordance with embodiments;

Figure 7 shows an example image in accordance with embodiment;

Figure 8 shows a holographic projection system in accordance with further embodiments;

Figure 9 shows a laser driver in accordance with further embodiments;

Figure 10 shows a LCOS driver in accordance with further embodiments;

Figure 11 shows a configuration for first, second and third detectors in accordance with embodiments; and

Figure 12 shows an alignment method for determining the focal plane of the holographic reconstruction.

The same reference numbers will be used throughout the drawings to refer to the same or like parts.

Detailed description of embodiments

The present invention is not restricted to the embodiments described in the following but extends to the full scope of the appended claims. That is, the present invention may be embodied in different forms and should not be construed as limited to, and embodied by, the described embodiments, which are set out for the purpose of illustration.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

It has been found that a holographic reconstruction of acceptable quality can be formed from a "hologram" containing only phase information related to the original object. Such a holographic recording may be referred to as a phase-only hologram. Some embodiments relate to phase-only holography by way of example only. That is, in some embodiments, the spatial light modulator applies only a phase-delay distribution to incident light. In some embodiments, the phase delay applied by each pixel is multi-level. That is, each pixel may be set at one of a discrete number of phase levels. The discrete number of phase levels may be selected from a much larger set of phase levels or "palette".

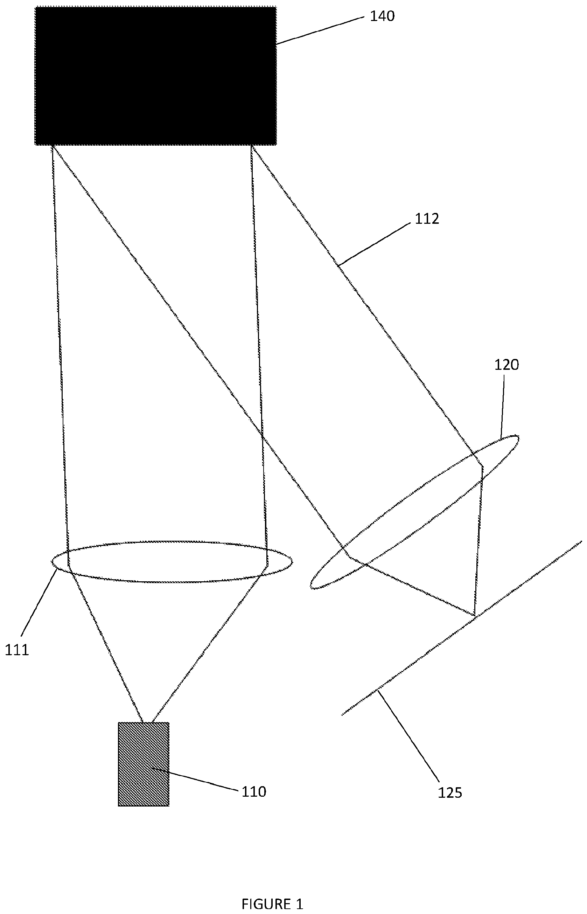

In some embodiments, the computer-generated hologram is a Fourier transform of the object for reconstruction. In these embodiments, it may be said that the hologram is a Fourier domain or frequency domain representation of the object. Figure 1 shows an embodiment using a reflective SLM to display a phase-only Fourier hologram and produce a holographic reconstruction at a replay field, for example on a light receiving surface such as a screen or diffuser.

A light source 110, for example a laser or laser diode, is disposed to illuminate the SLM 140 via a collimating lens 111. The collimating lens causes a generally planar wave front of light to be incident on the SLM. The direction of the wave front is off-normal (e.g. two or three degrees away from being truly orthogonal to the plane of the transparent layer). In other embodiments, the generally planar wave front is provided at normal incidence using a beam splitter, for example. In the example shown in Figure 1, the arrangement is such that light from the light source is reflected off a mirrored rear surface of the SLM and interacts with a phase-modulating layer to form an exit wave front 112. The exit wave front 112 is applied to optics including a Fourier transform lens 120, having its focus at a light receiving surface 125, for example a diffuser or screen.

The Fourier transform lens 120 receives a beam of phase-modulated light from the SLM and performs a frequency-space transformation to produce a holographic reconstruction at the light receiving surface 125.

Light is incident across the phase-modulating layer (i.e. the array of phase modulating elements) of the SLM. Modulated light exiting the phase-modulating layer is distributed across the replay field. Notably, in this type of holography, each pixel of the hologram contributes to the whole reconstruction. That is, there is *not* a one-to-one correlation between specific points on the replay field and specific phase-modulating elements.

In these embodiments, the position (depth) of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform. However, in other embodiments, the Fourier transform is performed computationally by including lensing data in the holographic data. That is, the hologram includes data representative of a lens as well as data representing the object. It is known in the field of computer-generated holograms how to calculate holographic data representative of a lens, so that light of the resulting holographic reconstruction travels as if there is a lens present in the beam path after the SLM. The holographic data representative of a lens may be referred to as a software lens, a lens component of the hologram or lens data. A phase-only holographic lens may be formed, for example, by calculating the phase delay caused by each point of the lens owing to its refractive index and spatially-variant optical path length. For example, the optical path length at the centre of a convex lens is greater than the optical path length at the edges of the lens. An amplitude-only holographic lens may be formed by a Fresnel zone plate. It is also known in the art of computer-generated hologram how to combine holographic data representative of a lens (the lens component) with holographic data representative of the object so that a Fourier transform can be performed without the need for a physical Fourier lens. In some embodiments, lensing data is combined with the holographic data by simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may additionally or alternatively include grating data - that is, data arranged to perform the function of a grating such as beam steering, to affect the position of the image in the replay field. Again, it is known in the field of computer-generated hologram how to calculate such holographic data and combine it with holographic data representative of the object. For example, a phase-only holographic grating may be formed by modelling the phase delay caused by each point on the surface of a blazed grating. An amplitude-only holographic grating may be simply superimposed on an amplitude-only hologram representative of an object to provide angular steering of an amplitude-only hologram.

A Fourier hologram of a 2D image may be calculated in a number of ways, including using algorithms such as the Gerchberg-Saxton algorithm. The Gerchberg-Saxton algorithm may be used to derive phase information in the Fourier domain from amplitude information in the spatial domain (such as a 2D image). That is, phase information related to the object may be "retrieved" from intensity, or amplitude, only information in the spatial domain. Accordingly, a phase-only Fourier transform of the object may be calculated.

In some embodiments, a computer-generated hologram is calculated from amplitude information using the Gerchberg-Saxton algorithm or a variation thereof. The Gerchberg Saxton algorithm considers the phase retrieval problem when intensity cross-sections of a light beam, $I_A(x, y)$ and $I_B(x, y)$, in the planes A and B respectively, are known and $I_A(x, y)$ and $I_B(x, y)$ are related by a single Fourier transform. With the given intensity cross-sections, an approximation to the phase distribution in the planes A and B, $\psi_A(x, y)$ and $\psi_B(x, y)$ respectively, is found. The Gerchberg-Saxton algorithm finds solutions to this problem by following an iterative process.

The Gerchberg-Saxton algorithm iteratively applies spatial and spectral constraints while repeatedly transferring a data set (amplitude and phase), representative of $I_A(x, y)$ and $I_B(x, y)$, between the spatial domain and the Fourier (spectral) domain. The spatial and spectral constraints are $I_A(x, y)$ and $I_B(x, y)$ respectively. The constraints in either the spatial or spectral domain are imposed upon the amplitude of the data set. The corresponding phase information is retrieved through a series of iterations.

In some embodiments, the hologram is calculated using an algorithm based on the Gerchberg-Saxton algorithm such as described in British patent 2,498,170 or 2,501,112.

In accordance with some embodiments, an algorithm based on the Gerchberg-Saxton algorithm retrieves the phase information $\psi[u, v]$ of the Fourier transform of the data set which gives rise to a known amplitude information $T[x, y]$. Amplitude information $T[x, y]$ is representative of a target image (e.g. a photograph). The phase information $\psi[u, v]$ is used to produce a holographic representative of the target image at an image plane.

Since the magnitude and phase are intrinsically combined in the Fourier transform, the transformed magnitude (as well as phase) contains useful information about the accuracy of the calculated data set. Thus, the algorithm may provide feedback on both the amplitude and the phase information.

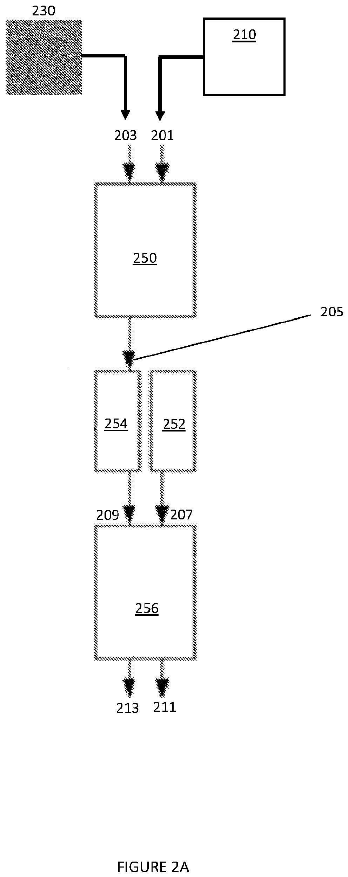

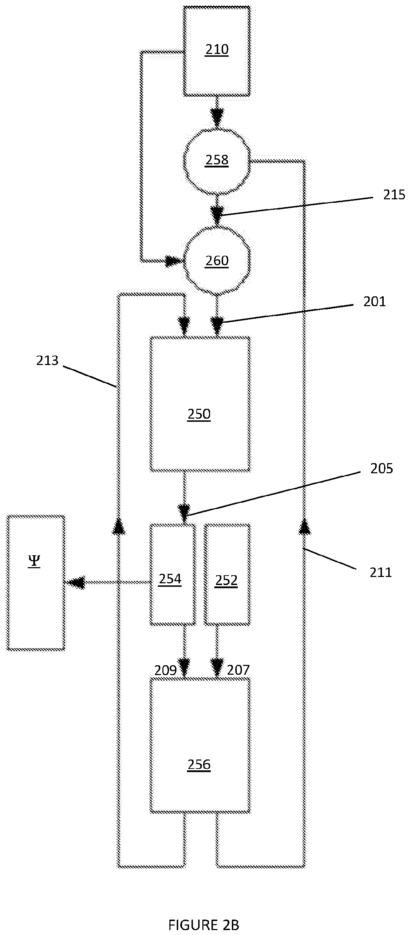

An example algorithm based on the Gerchberg-Saxton algorithm in accordance with some embodiments of the present disclosure is described in the following with reference to Figures 2. The algorithm is iterative and convergent. The algorithm is arranged to produce a hologram representing an input image. The algorithm may be used to determine an amplitude-only hologram, a phase-only hologram or a fully complex hologram. Example disclosed herein relate to producing a phase-only hologram by way of example only. Figure 2A illustrates the first iteration of the algorithm and represents the core of the algorithm. Figure 2B illustrates subsequent iterations of the algorithm.

For the purpose of this description, the amplitude and phase information are considered separately although they are intrinsically combined to form a composite complex data set. With reference to Figure 2A, the core of the algorithm can be considered as having an input comprising first complex data and an output comprising a fourth complex data. First complex data comprises a first amplitude component 201 and a first phase component 203. Fourth complex data comprises a fourth amplitude component 211 and a fourth phase component 213. In this example, the input image is two-dimensional. The amplitude and phase information are therefore functions of the spatial coordinates (x, y) in the far field image and functions of (u, v) for the hologram field. That is, the amplitude and phase at each plane are amplitude and phase distributions at each plane.

In this first iteration, the first amplitude component 201 is the input image 210 of which the hologram is being calculated. In this first iteration, the first phase component 203 is a random phase component 230 merely used as a starting point for the algorithm. Processing block 250 performs a Fourier transform of the first complex data to form second complex data having a second amplitude component (not shown) and a second phase information 205. In this example, the second amplitude component is discarded and replaced by a third amplitude component 207 by processing block 252. In other examples, processing block 252 performs different functions to produce the third amplitude component 207. In this example, the third amplitude component 207 is a distribution representative of the light source. Second phase component 205 is quantised by processing block 254 to produce third phase component 209. The third amplitude component 207 and third phase component 209 form third complex data. The third complex data is input to processing block 256 which performs an inverse Fourier transform. Processing block 256 outputs fourth complex data having the fourth amplitude component 211 and the fourth phase component 213. The fourth complex data is used to form the input for the next iteration. That is, the fourth complex data of the nth iteration is used to form the first complex data set of the (n+1)th iteration.

Figure 2B shows second and subsequent iterations of the algorithm. Processing block 250 receives first complex data having a first amplitude component 201 derived from the fourth amplitude component 211 of the previous iteration and a first phase component 213 corresponding to the fourth phase component of the previous iteration.

In this example, the first amplitude component 201 is derived from the fourth amplitude component 211 of the previous iteration as described in the following. Processing block 258 subtracts the input image 210 from the fourth amplitude component 211 of the previous iteration to form fifth amplitude component 215. Processing block 260 scales the fifth amplitude component 215 by a gain factor $\alpha$ and subtracts it from the input image 210. This is expressed mathematically by the following equations:

$$ R_{n+1}[x,y] = F'\{\exp(i\psi_n[u,v])\} $$

$$ \psi_n[u,v] = \angle F\{\eta \cdot \exp(i\angle R_n[x,y])\} $$

$$ \eta = T[x,y] - \alpha(|R_n[x,y]| - T[x,y]) $$

Where:

F' is the inverse Fourier transform;
F if the forward Fourier transform;
R is the replay field;
T is the target image;
$\angle$ is the angular information;
$\psi$ is the quantized version of the angular information;
$\varepsilon$ is the new target magnitude, $\varepsilon \geq 0$; and
$\alpha$ is a gain element $\sim 1$.

The gain element $\alpha$ may be fixed or variable. In examples, the gain element $\alpha$ is determined based on the size and rate of the incoming target image data.

Processing blocks 250, 252, 254 and 256 function as described with reference to Figure 2A. In the final iteration, a phase-only hologram $\psi(u, v)$ representative of the input image 210 is output. It may be said that the phase-only hologram $\psi(u, v)$ comprises a phase distribution in the frequency or Fourier domain.

In other examples, the second amplitude component is not discarded. Instead, the input image 210 is subtracted from the second amplitude component and a multiple of that amplitude component is subtracted from the input image 210 to produce the third amplitude component 307. In other examples, the fourth phase component is not fed back in full and only a portion proportion to its change over, for example, the last two iterations is fed back.

In some embodiments, there is provided a real-time engine arranged to receive image data and calculate holograms in real-time using the algorithm. In some embodiments, the image data is a video comprising a sequence of image frames. In other embodiments, the holograms are precalculated, stored in computer memory and recalled as needed for display on a SLM. That is, in some embodiments, there is provided a repository of predetermined holograms.

However, some embodiments relate to Fourier holography and Gerchberg-Saxton type algorithms by way of example only. The present disclosure is equally applicable to Fresnel holography and holograms calculated by other techniques such as those based on point cloud methods.

The present disclosure may be implemented using any one of a number of different types of SLM. The SLM may output spatially modulated light in reflection or transmission. In some embodiments, the SLM is a liquid crystal on silicon (LCOS) SLM but the present disclosure is not restricted to this type of SLM.

A LCOS device is capable of displaying large arrays of phase only elements in a small aperture. Small elements (typically approximately 10 microns or smaller) result in a practical diffraction angle (a few degrees) so that the optical system does not require a very long optical path. It is easier to adequately illuminate the small aperture (a few square centimetres) of a LCOS SLM than it would be for the aperture of a larger liquid crystal device. LCOS SLMs also have a large aperture ratio, there being very little dead space between the pixels (as the circuitry to drive them is buried under the mirrors). This is an important issue to lowering the optical noise in the replay field. Using a silicon backplane has the advantage that the pixels are optically flat, which is important for a phase modulating device.

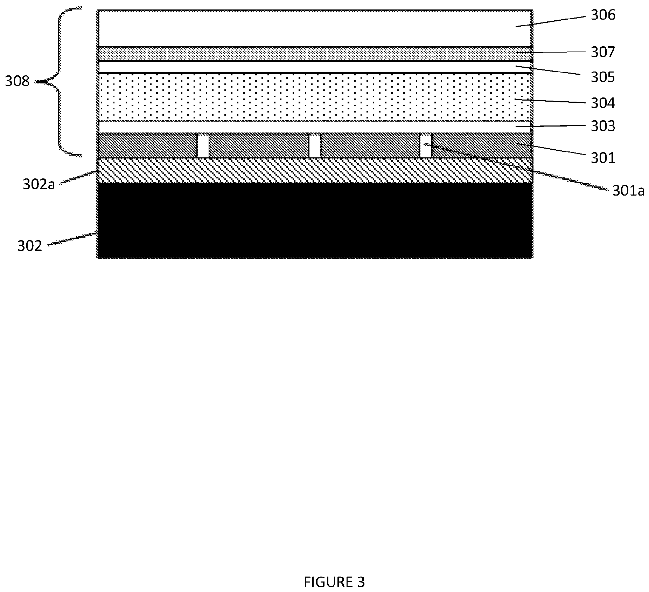

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror. An alignment layer 303 is disposed on the array of electrodes, and a liquid crystal layer 304 is disposed on the alignment layer 303. A second alignment layer 305 is disposed on the liquid crystal layer 304 and a planar transparent layer 306, e.g. of glass, is disposed on the second alignment layer 305. A single transparent electrode 307 e.g. of ITO is disposed between the transparent layer 306 and the second alignment layer 305. Each of the square electrodes 301 defines, together with the overlying region of the transparent electrode 307 and the intervening liquid crystal material, a controllable phase-modulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection but the present disclosure is equally applicable to a transmissive LCOS SLM. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key point for projection of moving video images).

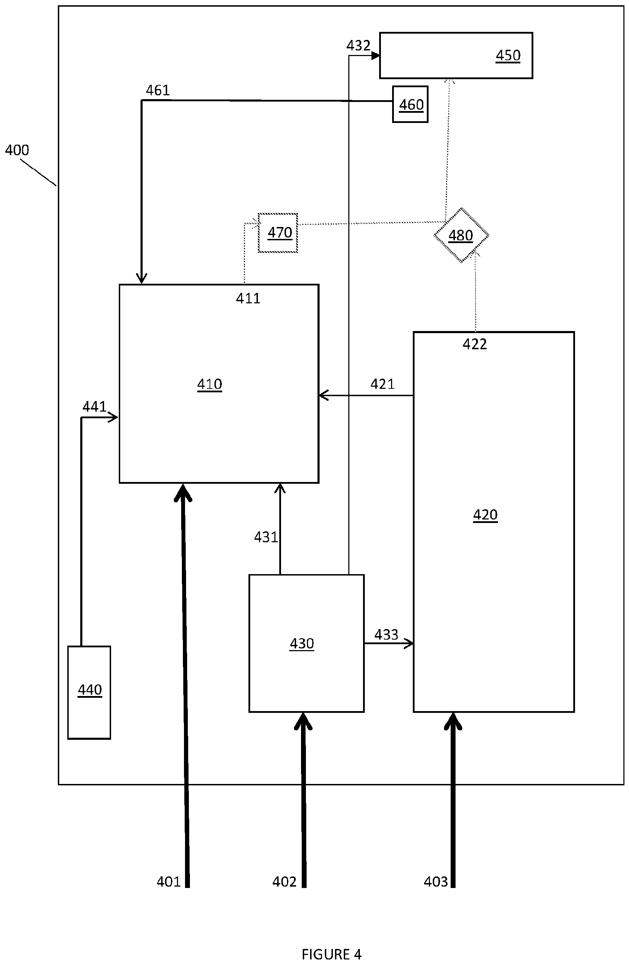

Figure 4 shows a holographic projection system 400 in accordance with embodiments. The holographic projection system 400 comprises a first input 401 for a USB control signal, a second input 402 for input power and a third input 403 for HDMI. The holographic projection system 400 comprises a laser controller 410, a LCOS driver 420, a power transformer 430, an ambient light sensor 440, a light receiving surface 450, for example a diffuser or screen, a light sensor 460, a laser 470 and an SLM 480.

The first input 401 for a USB control signal to the holographic projection system 400 is received by a first input of laser controller 410. The laser controller 410 is further arranged to receive first power 431 from the power transformer 430, a synchronisation signal 421 from the LCOS driver 420, an ambient light signal 441 from ambient light sensor 440 and a light detection signal 461 from the light sensor 460. The laser driver output 411 is connected to the laser 470.

The second input 402 for power to the holographic projection system 400 is received by the input of power transformer 430. The power transformer 430 comprises: a first output providing first power 431 to the laser controller 410; a second output providing second power 432 to the diffuser 450; and a third output providing third power 433 to the LCOS driver 420. In some embodiments, the diffuser is not powered and second power 432 may be omitted.

The third input 403 for HDMI to the holographic projection system 400 is received by a first input of LCOS driver 420. The LCOS driver 420 is further arranged to receive third power 433 from the power transformer 430, as described above. The LCOS driver is arranged to output the synchronisation signal 421 to the laser controller 410 and a control signal 422 (comprising light modulation data) to the SLM 480.

Laser 470 is arranged to irradiate the SLM 480 in accordance with the laser driver output 411. Each pixel of the SLM receives a portion of the incident light. The SLM 480 is controlled in accordance with the control signal 422 to spatially modulate the received light. The control signal 422 comprises instruction representing the hologram. That is, the control signal 422 comprises holographic data. Each pixel of the SLM is individually addressed to independently modulate a corresponding portion of the incident light. The pixels collectively represent a holographic pattern. Accordingly, a light modulation pattern or distribution is applied to the received wavefront. In some embodiments, a phase-delay distribution is applied to the wavefront. It may be said that the SLM "displays" the hologram.

The spatially modulated light from the SLM forms an image on light receiving surface 450, providing the replay field. The image is a holographic reconstruction. The holographic reconstruction is formed within a holographic replay area on a holographic replay plane. The holographic reconstruction may require optics, such as a Fourier transform lens, not shown in Figure 4. Alternatively, the control signal 422 may further comprises additional holographic data arranged to perform the reconstruction without need for physical optics.

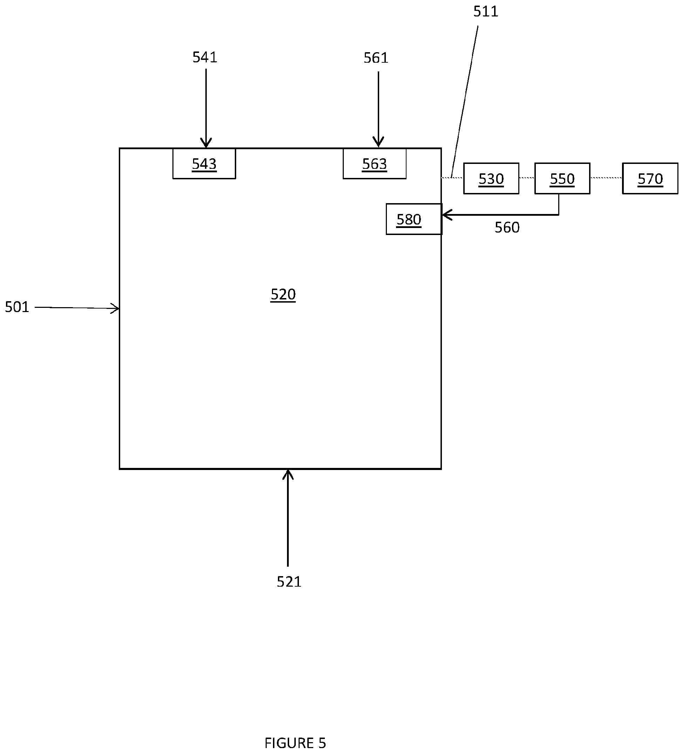

Figure 5 shows a laser driver of the holographic projection systems in accordance with embodiments. Laser driver comprises a microcontroller 520 arranged to receive the first input 501 for a USB control signal. The present disclosure refers to a USB control signal by way of example only and any signal standard could be used. The laser driver is further arranged to receive the synchronisation signal 521 from the LCOS driver, the ambient light signal 541 from the ambient light sensor (via a ADC 543) and the light detection signal 561 from the light sensor (via ADC 563). The laser driver output 511 is connected to the input of DAC 530. The output of DAC 530 is connected to the input of laser driver 550. The output of laser driver 550 is connected to the drive of laser 570. Laser driver 550 provides a current feedback 560 to an ADC 580 of the microcontroller 520.

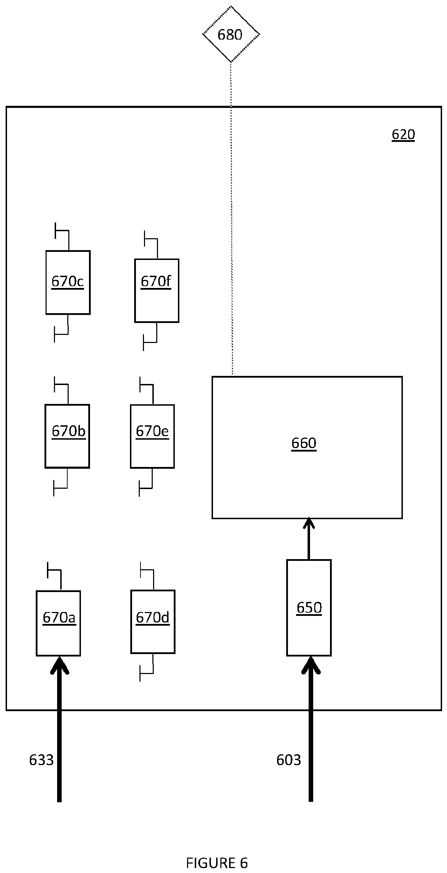

Figure 6 shows a LCOS driver 620 of the holographic projection system in accordance with embodiments. LCOS driver 620 comprises a HDMI receiver chip 650, a Field-Programmable Gate Array (FPGA) 660 and a plurality of local transformers 670a-670f. HDMI receiver chip 650 has an input arranged to receive the third input 603 of the holographic projection system and an output connected to the input of the FPGA 660. The output of the FPGA 660 is connected to the LCOS 680.

The image has a primary image region comprising information for a user and a secondary image region, different from the primary region, for example spaced apart from the primary image region. In some embodiments, any remaining area of the image may be used as a noise dump. The primary image region may comprise augmented reality information such as information indicating speed or location. Light sensor 460 is arranged to measure the optical power of the secondary image region. That is, the light sensor 460 is arranged to receive light diffusely reflected (or transmitted) by the portion of the light receiving surface 450 corresponding to the secondary image region or light intercepted travelling to the portion. The light sensor may be positioned in front of the light receiving surface or behind the light receiving surface. In some embodiments not shown, the light sensor is positioned behind the light receiving surface to provide a despeckling effect which reduces noise. The light sensor may be positioned before or after the light receiving surface, relative to the light path. In some embodiments, the secondary image region comprises information which is principally not intended for the user. In some embodiments, light sensor 460 is arranged such that it does not receive any light from the primary image region.

The inventors recognised that with a holographic projection system it is possible to computationally-encode additional information in the hologram which can be dedicated to the purpose of providing feedback to the system. This feedback can be used to provide an improved holographic reconstruction. In some embodiments, the feedback is used to control parameters of the projection system in real-time.

The inventors found that with a holographic projection system, the brightness of the image is dependent on how much image content is displayed. Specifically, it is found that if more content is displayed in the image, the brightness of the image decreases as the luminance falls. This is because, unlike conventional display technologies, the input light is divided by the diffractive holographic process across the image (which, it will be recalled, is the portion of the replay field that receives light).. It may be considered that there is an inverse relationship between the amount of information content and optical power. For example, a holographic image of one unit of area will be ten times brighter than an image formed of ten units of area. Owing to these consequences of the holographic process, information on the brightness of the primary image region may be provided by directing some of the light to a secondary image region and monitoring the optical power of the secondary image region. This is because the optical power of the secondary image region is directly representative of the radiant flux ($Js^{-1}m^2$) or luminance ($cdm^{-2}$), and hence the brightness, of the image (those parts of the replay field that are illuminated). This is in particular the case if the secondary image region is of a fixed area or the area of the secondary image region is taken into account. Advantageously, light can be readily directed to a secondary image region by the computer-generated hologram of the present disclosure without adversely affecting the primary image region or obscuring the user's view of the information displayed in the primary image region.

Accordingly, in some embodiments, a holographic projection system, for example as specifically described above, is arranged to display information for a user. The projection system comprises a light receiving surface, for example a screen or diffuser and a first light source arranged to output first light at a first wavelength. A first spatial light modulator is arranged to receive the first light from the first light source and output spatially-modulated light in accordance with a first computer-generated hologram represented on the first spatial light modulator to form a first image on the light receiving surface. The first image comprises a primary image region comprising the information for a user and a secondary image region different from the primary image region. For example, the secondary image region may be spaced apart from the primary image region. A first detector is arranged to detect the optical power of the secondary image region of the first image.

The hologram may include information which directs light to the primary image region and secondary image region. The light directed to the primary image region combines to form useful information or data for a user. The secondary image region may comprise a spot or other shape of light but any preferred light pattern may be directed to the secondary image region.

In some embodiment, the first computer-generated hologram comprises a first hologram component representative of the primary region of the image. The first computer-generated hologram may also comprise a second hologram component representative of the light pattern directed to the secondary image region. The secondary image region may be provided for the purpose of providing useful feedback to the projection system. To that end, in some embodiments, the secondary image region comprises control information for the holographic projection system. The term "control information" is used to reflect that the content is used by the projection system rather than a user or viewer of the image. That is, the control information may not provide useful visual information to the user or viewer.

Advantageously, the holographic technique of the present disclosure allows the control information (secondary image region) to be positioned away from any content intended for a user. Accordingly, the control information may be physically spaced away from the content intended for the viewer so as not to impede the user's view.

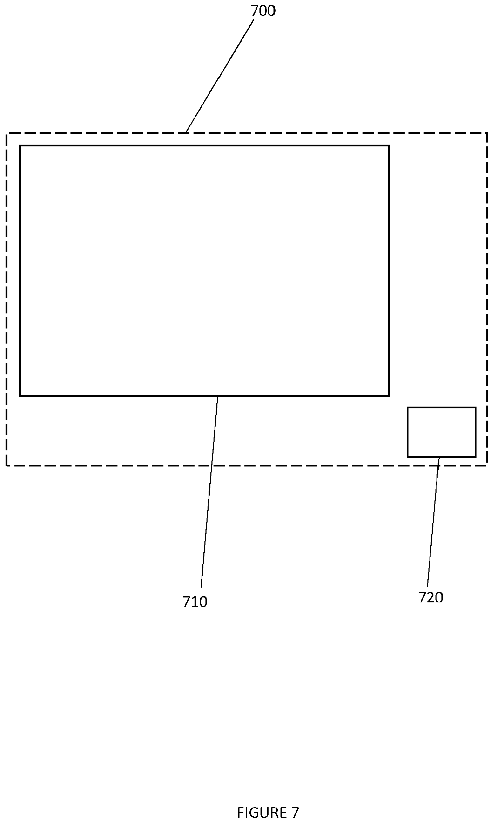

Figure 7 shows an example of an image 700, comprising a primary image region 710 and a secondary image region 720, in accordance with some embodiments.

In some embodiments, the secondary image region is spatially separated from the primary image region, for example disposed peripherally to the primary image region. That is, the secondary image region is disposed outside or away from the primary image region, for example near the perimeter or edge of the holographic replay field. The secondary image region may thus be spaced apart from the primary image region, for example abutting the primary image region, having a common border with the primary image region or being spaced further apart with an intervening image or non-image region between the primary and secondary image region.

In some embodiments, the first computer-generated hologram corresponds to a mathematical transformation of the image, optionally, a Fourier or Fresnel transformation. That is, in some embodiments, the first computer-generated hologram is a Fourier or Fresnel hologram. In these embodiments, the first computer-generated hologram may comprise a second hologram component arranged to perform a Fourier lensing function. However, in other embodiments, the computer-generated hologram is calculated by other mathematical techniques such as those based on ray-tracing or point-cloud methods.

A measure of the optical power of the secondary image region may be used to provide an improved holographic reconstruction. Specifically, in some embodiments, the holographic projection system further comprises a light controller arranged to change the optical power of the light output by the first light source in response to the detected optical power of the secondary image region, for example to provide a closed-loop feedback control of image brightness. This feedback to the light controller, for example a laser controller, enables the optical power emitted by the light source, and hence the brightness of the holographic image to be controlled based on the detected optical power. It is believed that the optical power of the secondary image region is directly representative of the brightness of the primary image region, which is related to optical power per unit area.

It is believed that, as a consequence of projecting the image using holography, the brightness of the image is dependent on how much content is displayed. This can lead to visible changes in the brightness of the image during display of a dynamically changing image. This problem is addressed in some embodiments by the use of closed-loop feedback control, based on measurement of the optical power of the *secondary* image region. Specifically, the feedback may be used to maintain substantially constant brightness in the *primary* image region by setting a desired optical power of the secondary image region accordingly as a parameter of a negative error-correcting feedback loop. In some embodiments, the light controller is arranged to maintain the optical power of the primary image region at a substantially constant value in response to the detected optical power of the secondary image region.

The brightness of the primary image region may be maintained by using a reference optical power of the secondary image region. Specifically, the brightness of the primary image region may be maintained at a level at which the optical power of the secondary region is at the reference value. In some embodiments, the light controller is arranged to decrease the optical power of the light output by the light source if the detected optical power of the secondary image region is greater than the reference optical power and/or increase the optical power of the light output by the light source if the detected optical power of the secondary image region is less than the reference optical power.

The reference optical power for the secondary image may be determined by any means, to correspond to a desired brightness, for example measured in terms of luminance, by a calculation that takes account of the area of the secondary image region and possibly other factors, such as perceptual wavelengths scaling. For example, the reference optical power may be hardwired in the system, predetermined by a user or selected by a user. In some embodiments, the reference optical power is determined by the optical power of the secondary image region at an earlier time, for example to maintain image brightness constant over time.

In some embodiments, feedback control with respect to the reference value may involve a negative feedback loop, for example with the light controller changing the optical power of the light output in proportion to a value obtained by subtracting the detected optical power from the reference optical power to provide a proportional control term. A gain factor may be used to multiply this difference to convert the feedback signal to units related to brightness, for example luminance. Other control terms such as differential and integral terms or other, for example non-linear, terms may also be used. In some embodiments, the feedback control may incorporate an element of hysteresis, for example the optical power of the light output may be increased if the detected optical power falls short of the reference optical power by more than a first threshold amount and may be decreased if the detected optical power exceed the reference optical power by more than a second threshold amount.

In all embodiments, a gain factor, G, based on the optical power feedback, is applied to the drive input of the light source and the optical power of the primary image region is changed by changing the gain factor. In all embodiments, the gain factor is determined by the equation:

$$G = \frac{T}{P \times \frac{x}{y}}$$

wherein T = the desired maximum luminance (cd/m$^2$) of the image, P = the luminance (cd/m$^2$) at the first wavelength of the secondary image region(obtained, for example, by dividing the detected optical power by the area of the secondary image region and scaling to convert from Js$^{-1}$m$^{-2}$ to cdm$^{-2}$, as is well known), x = the total number of grey levels used in the image and y = the grey level of the light of the secondary image region. For example, the image may comprise 256 grey levels: grey level 0 may be black and grey level 255 may be white. It will be understood that reference to "grey level" does not imply a specific colour, or absence thereof, of the image but rather refers to discretised levels of brightness (luminance, intensity, etc) for a given image area, for example a pixel of a digitised image.

It is known how to convert a radiant/optical power (Js$^{-1}$) or radiant intensity (Js$^{-1}$sr$^{-1}$) measurement from a light detector into luminance. It is also known in the display industry that a desired maximum luminance (cd/m$^2$) may be specified. The gain, G, may therefore be used to ensure the display provides the desired maximum luminance regardless of how much image content is displayed or the areal extent of the image, in particular of the primary image region.

In some embodiments, the first detector is arranged to provide a non-linear electrical response to the optical power of the detected light. Advantageously, this means that the ADCs and DACs used in the laser driver may not need to be more than 8-bit in order to provide a high dynamic range such as 1:10,000. In some embodiments, the first detector comprises non-linear electronics. In some embodiments, the non-linear electronics comprise a logarithmic amplifier. In some embodiments, the non-linear electronics comprise an amplifier including automated gain control or switchable gain resistors. In other embodiments, the non-linear response is provided by using a detector comprising multiple photodetectors with different sensitivities.

The inventors found that with a composite colour holographic projection system, the colour temperature (or colour balance) of the image is dependent on how much image content is contained in each of the component colours, or the image area of each component colour image. That is, the inverse relationship between the amount of information content or image area and optical power independently extends to each colour. Therefore, a composite colour image will appear more red if the amount or area of red content falls relative to blue and/or green. In other words, the red areas in the image will get brighter when the area of red in the image decreases. Likewise, the composite image may appear more blue if the amount or area of blue content falls relative to red and/or green. The inventors identified that this affects the perceived colour balance or colour temperature of the composite colour image. This is because, unlike conventional display technologies, the input light for each colour is evenly divided across the image area by the diffractive holographic process, as discussed above, and the optical power of the light of each colour is independent of the optical power of the light of the other colours. Accordingly, the colour temperature of the image may be continually changing as the information content is continually changing for each colour. However, information on the colour balance of the primary image region may be provided by directing some of the light of each colour to a secondary image region and monitoring the optical power of the each colour in the secondary image region. This is because the optical power of the secondary image region is representative of the brightness of the primary image, as discussed above. Advantageously, light of each colour can be readily directed to a secondary image region by holography in accordance with the present disclosure without adversely affecting the primary image region or obscuring the user's view of the information displayed in the primary image region. The secondary image region may be the same for each colour or a separate respective secondary image region may be used for one, some or all of the colours.

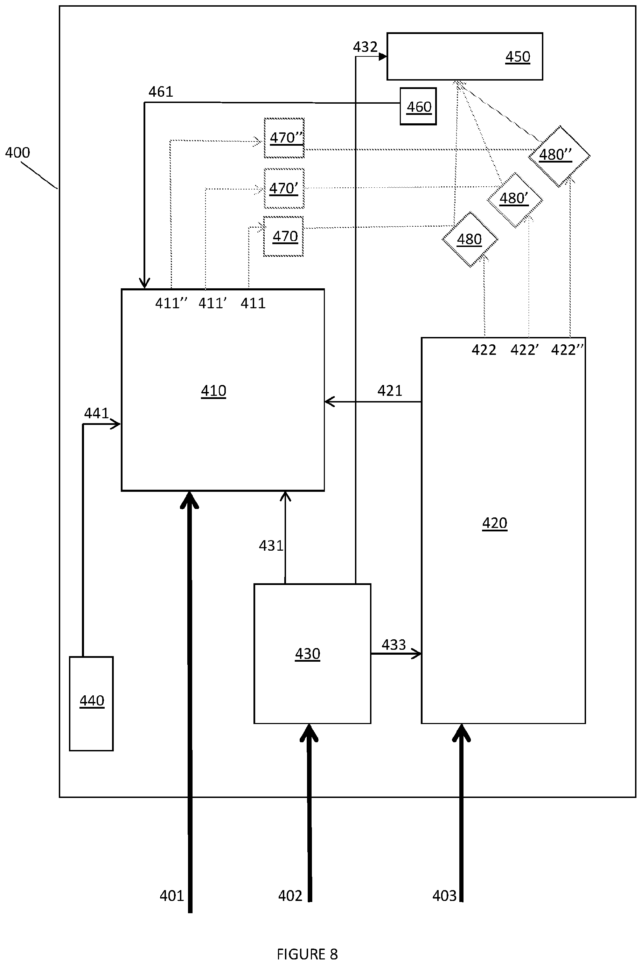

Figure 8 shows a composite colour holographic projection system 800 in accordance with embodiments. Figure 8 largely corresponds to Figure 4 and the skilled person will understand how the description of Figure 4 extends to Figure 8. Figure 8 shows two additional lasers 470' and 470", two additional SLMs 480' and 480" and corresponding additional optical and electrical paths. For example, laser 470 may be red, laser 470' may be green and laser 470" may be blue. Likewise, SLM 470 may be allocated to forming a red image, SLM 480' may be allocated to forming a green image and SLM 480" may be allocated to forming a blue image. Different computer-generated holograms are represented on the three SLMs in order to reconstruct a composite colour image. The corresponding optical paths will be apparent to the reader. The primary image regions of the single colour images are largely coincident on the light receiving surface. Each colour image comprises a primary image region and a secondary image region as previously described. The secondary image region may or may not be coincident.

Figure 8 shows three colour channels by way of example only. The present disclosure is not limited to three colour channels and is equally applicable to any plurality of colour channels, and the technique of Frame Sequential Colour as described below.

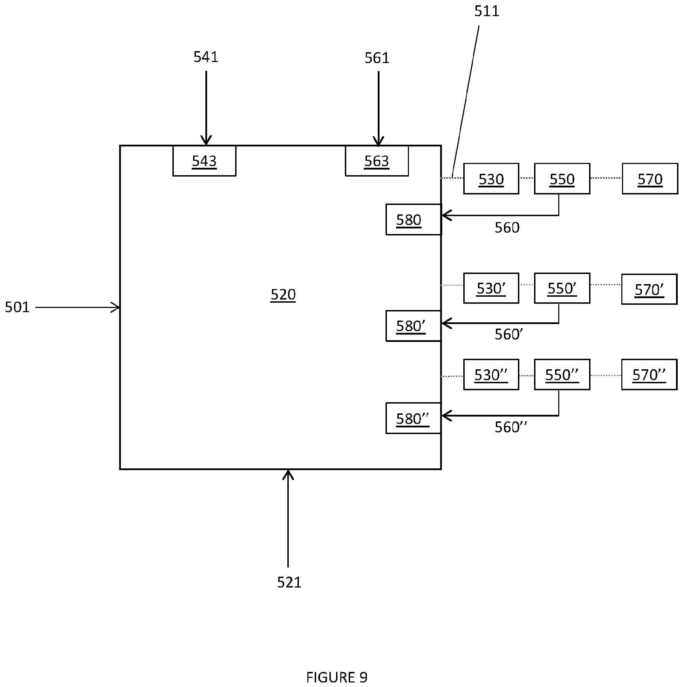

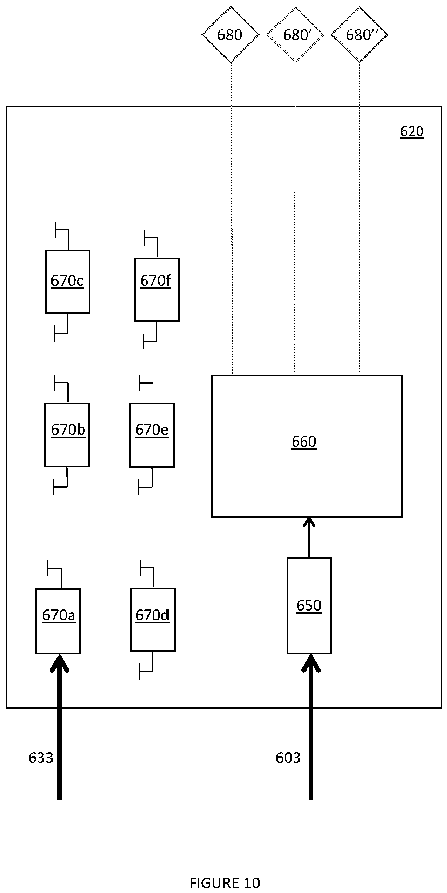

Figures 9 and 10 correspond to Figures 5 and 6 and show the additional components, electrical and optical channels required to provide composite colour using three single colour channels such as red, green and blue. Again, three colour channels are shown by way of example only and the present disclosure is equally applicable to any plurality of single colour channels. The skilled person will understand how the description of Figures 5 and 6 extends to Figures 9 and 10 in order to provide composite colour.

Accordingly, in some embodiments, for example configured as described above, a holographic projection system as described above further comprises: a second light source arranged to output second light having a second wavelength, wherein the second wavelength is different from the wavelength of the first light output by the first light source. A second spatial light modulator is arranged to receive the second light from the second light source and output second spatially-modulated light in accordance with a second computer-generated hologram represented on the second spatial light modulator to form a second image on the light receiving surface. The second image comprises: a primary image region comprising information for a user and a secondary image region. The primary image region of the second image is substantially coincident with the primary image region of the first image to form a composite image. A second detector is arranged to detect the optical power of the secondary image region of the second image.

The secondary image regions of the first and second image may be substantially coincident, noting that the respective light has different respective wavelengths and can thus be detected separately by the detectors using appropriate filters or wave-length responses for the detectors. Coincidence of the secondary regions of the first and second images is not, however, a requirement and the regions may be spatially separate, for example overlapping, adjacent to each other or separated further apart.

A measure of the optical power of the secondary image region of the first image and/or the second image may be used to provide an improved holographic reconstruction. Specifically, in some embodiments, the light controller is further arranged to change the optical power of the first light output by the first light source and/or the optical power of the second light output by the second light source in response to the detected optical power of the secondary image region of the image and/or the detected optical power of the secondary image of the second image so as to change the colour balance of the composite image. It will be understood that for embodiments with more than two colour channels, for example three colour channels, this arrangement may be replicated for all colour channels, for example by keeping the brightness of all colour channels substantially constant independently as described above.

Accordingly, feedback to the light controller, for example a laser controller, is provided which enables the colour balance of the composite colour holographic image to be dynamically tuned. It is believed that this is possible because the optical power of each secondary image region is directly representative of the optical power of the corresponding primary image region owing to the diffractive holographic process. For example, if the optical power of the secondary image region of the red image falls, the drive power to the red light source may be increased. For example, if the optical power of the secondary image region of the green image increases, the drive power to the green light source may be decreased. Such processes, for example negative feedback process such as those described above, may be used to continually monitor and independently tune the optical power output by each light source.

A consequence of projecting plural single colour images using holography is that the colour balance of the composite image can visible change during display of a dynamically changing colour image on a per frame basis. However, this problem is addressed in some embodiments wherein the closed-loop power feedback, based on measurement of the optical power of each *secondary* image region, is used to maintain substantially constant colour balance in the *primary* image region. That is, in some embodiments, the light controller is arranged to maintain the colour balance of the primary image region at a substantially constant value in response to the detected optical power of each secondary image region.

Due to the differences in components associated with the laser driver and light feedback sensor, the so-called white point will differ from device to device. This white point difference can be compensated for by altering the amount of power directed to the secondary image region at one or more wavelength, hence altering the optical power of responding light emanating from the secondary image region. For example, artificially adding more red power to the secondary image region will result in an overall reduction in red power in the image due to the increased red optical power fed back as a result. Since holograms are not constrained to a nominal number of grey levels, for example 256 grey levels, fine tuning of the white point is possible.

In some embodiments, a second gain factor, G', is applied to the drive input of the second light source and the colour balance of the primary image region is changed by changing the second gain factor. In some embodiments, the second gain factor is determined by the equation:

$$G' = \frac{T'}{P' \times \frac{x'}{y'}}$$

wherein T' = the desired maximum luminance at the second wavelength of the second image, P' = the luminance at the second wavelength of the secondary image region of the second image, x' = the total number of grey levels used in the second image and y' = the grey level of the light of the secondary image region of the second image.

In some embodiments, the second detector is arranged to provide a non-linear electrical response to the optical power of light at the second wavelength. Advantageously, this means that the ADCs and DACs used in the laser driver do not need to be more than 8-bit in order to provide a high dynamic range such as 1:10,000. In some embodiments, the second detector comprises non-linear electronics. In some embodiments, the non-linear electronics comprise a logarithmic amplifier. In some embodiments, the non-linear electronics comprise an amplifier including automated gain control or switchable gain resistors. In other embodiments, the non-linear response is provided by using multiple photodetectors with different sensitivities. . In some embodiments related to composite colour, there is provided a detector for each colour. That is, in some embodiments, a detector arrangement comprises a plurality of spatially-separated single colour detectors. In other embodiments, however, the detector arrangement comprises an RGB sensor or a CMY sensor. That is, in some embodiments, the first detector and second detector are part of the same composite colour detector. In these embodiments, it may be understood that the output of the composite colour detector comprises a first detection signal corresponding to the first wavelength and a second detection signal corresponding to the second wavelength, and so forth.

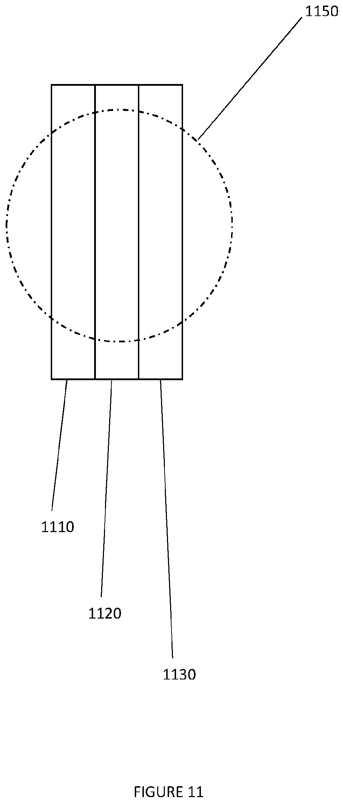

Figure 11 shows an example comprising a first detector 1110, second detector 1120 and third detector 1130. The first detector 1110 is sensitive to light at a first wavelength (e.g. red). The second detector 1120 is sensitive to light at a second wavelength (e.g. green). The third detector 1130 is sensitive to light at a third wavelength (e.g. blue). The first, second and third detector each have a substantially one-dimensional shape. In these embodiments, each detector may be described as having a slit shape. In some embodiments, the secondary image regions of the respective images are substantially coincident. Figure 11 shows the substantially coincident secondary image regions. The secondary image regions form a composite colour spot of light 1150. The skilled person will be aware that the detectors may take different forms known in the art and may include narrow band filters as required to provide detection at three different wavelengths. For example, three wideband photodiodes may be used with three corresponding single colour filters for each composite colour (for example, RGB). In some embodiments, the holographic process may be used to spatially separate the secondary image regions onto corresponding spatially separated detectors.

In some embodiments, each detector (more specifically, the detection area of the detector or an aperture limiting the detection area) has a defined shape, for example a one-dimensional, shape. The defined shape may correspond to the shape of a respective secondary image region. In some embodiments, each detector-secondary image region pair have a corresponding, for example one-dimensional shape. That is, the shape and/or size of the detection area of the detector is substantially equal to or corresponds to that of the corresponding secondary image region. For example, the shape and/or size of the detection area of the red light detector is substantially equal to that of the corresponding secondary image region of the red image.

Advantageously, this geometry allows for improved optical alignment of the image. It may be understood that when the secondary image region and detector are perfectly aligned (i.e. coincident), the signal from the detector will be a maximum. Since the image is computer-generated, the relative position of the primary image region and secondary image region is well-defined. Accordingly, it is possible to assess the optical alignment of the primary image region (which, of course, contains the information for the user) within the system by monitoring the signal from the detector from the secondary image region.

Furthermore, since the image is computer-generated, it is possible to move the image across an area and determine when the system is optically aligned by determining when the signal from the detector is at a maximum. That is, in some embodiments, the holographic controller is arranged to perform an optical alignment process comprising changing the position of the image on the screen and detecting the optical power of the second image region at a plurality of positions of the image to find a position where the detected optical power is greatest as the aligned position.

It will be understood that the defined shape of the detector (or aperture) and secondary image region informs the directional accuracy of the power/position feedback and hence of the achievable adjustment. For example, a substantially one-dimensional or slit shape will provide a better accuracy across the shape/slit than along it. Therefore, depending on requirements, other shapes such as a dot, circle, disk, square, diamond, lozenge, cross, etc. may be used for the active area of the detectors and the secondary image regions. It will also be appreciated that, for the purpose of alignment of components of a colour image, alignment is facilitated if the secondary image regions are mutually coincident and further facilitated if the active areas of the detector(s) are also coincident. Finally, while the benefit of alignment is most apparent for the mutual alignment of colour component images, the disclosed alignment technique is equally applicable to a single colour image, in order to position the image in a precise position relative to a frame of reference defined by detector location and configuration.

In some embodiments, the computer-generated hologram includes a component providing an optical grating effect and the image is moved by changing parameters of the grating. The person skilled in the art of computer-generated holography knows how to combine holographic data representative of an image with holographic data providing optical functions such as lensing and/or angular steering. For example, such holographic data may be combined by simple vector addition. In some embodiments, the computer-generated hologram comprises a third hologram component arranged to perform a grating function and the position of the image is changed during the optical alignment process by changing the grating function of the third hologram component. In some embodiments, the optical alignment process further comprising determining the grating function which gives rise to the greatest detected optical power of the secondary image region by, for example, horizontal and/or vertical scanning. The skilled person will understand how the above method may be extended to align all single colour images in a composite image, or to align a single image with respect to a frame of reference.

Furthermore, in addition to scanning to find the best spatial location on the x-axis and y-axis - or independently, by monitoring the power while adding a lens function to the hologram it is possible to determine a desired, for example optimal, focal plane. This works because of the coherent interference of light, as described below. At the desired focal plane, the constructive and destructive interference is minimised.

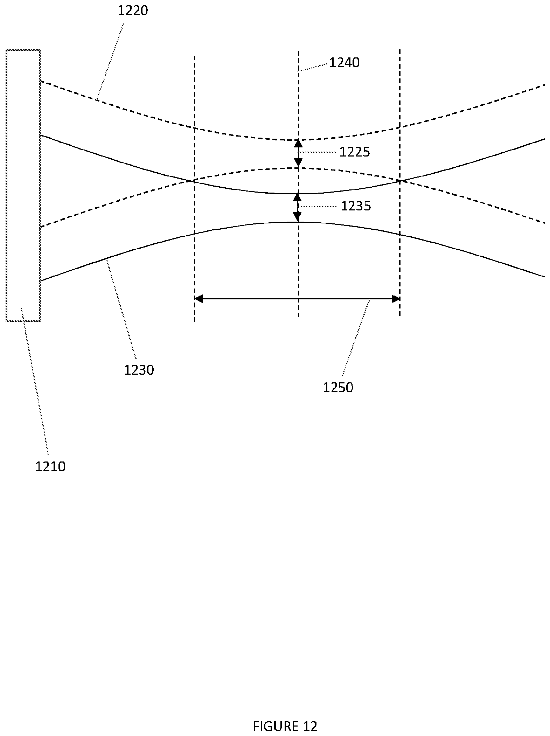

Figure 12 shows a spatial light modulator 1210 arranged to form a first image point 1225 and a second image point 1235 on a focal plane 1240, wherein the first image point 1225 and second image point 1235 are adjacent. The inventor has found that the first image point 1225 may be considered as being formed at the minimum of a first beam waist 1220. Likewise, the second image point 1235 may be considered as being formed at the minimum of a second beam waist 1230. It may be seen from Figure 12 that in the region 1250 near the focal plane 1240, there is no overlap between the first beam waist 1220 and second beam waist 1230. The inventor has found that outside the region 1250, the light field is noisy. It is believed that this is because the light is spatially-modulated (e.g. phase modulated) and overlap between the first beam waist 1220 and second beam waist 1230 of the region 1250 therefore causes local constructive and destructive interference. This constructive and destructive interference results in features - such as fringes or brightened/darkened regions - in the light field. In region 1250, the inventor has found that this interference is substantially eliminated. Region 1250 may therefore be probed using a light detector - such as a spatial light detector - to determine the plane (optically parallel to the spatial light modulator 1210) in which the light field is "cleanest". In some embodiments, this plane is identified by determining the plane in which local patterns in the light field caused by interference are minimised, for example as judged by an image formed on a light receiving surface in the plane.

For example, features in the holographic reconstruction blur when out of focus (the light receiving surface is not in the focal / reconstruction plane), resulting in overlap between otherwise well separated features. Given the coherent nature of the light, this overlap tends to result in unwanted interference between features in the image reducing the quality of the image, for example as measured by contrast or the sharpness of contours or noise. This can be understood as cross talk between image features such as image spots and results in blotchiness of the image. In some embodiments, the holographic reconstruction may contain image spots, analogous to display pixels, to form an image on the light receiving surface and blurring of the image spots when not in focus can cause the light of adjacent spots to interfere and produce the discussed interference patterns. In some embodiments, the correct plane is found by identifying the plane containing maximum contrast or sharpness or minimal noise, as judged by an image captured from a light receiving surface. The focal plane is moved by changing a lens component of the hologram or moving a physical lens arrangement. The light pattern on the light receiving surface is imaged, for example, using a digital image sensor or camera. The desired focal plane is found as that plane where the captured image has maximum contrast or sharpness or minimum noise, or noise, sharpness or contrast better than a threshold level.

In some embodiments, rather than using an image sensor, a spot sensor or detector such as photo diode or photo multiplier tube discussed above is used instead, for example in the secondary image region as described above. In these embodiments, the measure of contrast, sharpness or noise is obtained by scanning an image region, for example all or a portion of the secondary image region, across the spot sensor and recording the variation of the detected intensity over time as the image region is scanned. The image region may be scanned by moving the sensor or by moving the reconstruction of the image region by combining a grating function with the hologram and varying the grating to scan the image region.

A relatively large region 1250 is shown in Figure 12 for the purpose of illustration only. In practice, region 1250 may be a few millimetres in length and therefore allows for location of the focal plane with corresponding accuracy.

In some embodiments a holographic projection system to display information for a user comprises a light receiving surface, a light source and a spatial light modulator, for example as disclosed above. The system may also comprise a detector in accordance with any of the embodiments disclosed above. In addition to, or instead of, the detector, the system comprises a detector arranged to detect a measure of image quality of a region, that is all or part of, the image, for example image contrast or sharpness or a measure of noise in the image. In some embodiments, the detector comprises an image sensor and a processor configured to compute the measure of image quality from a signal captured by the image sensor.

The system may also comprise, in some embodiments, a controller configured to move the image normal to a plane of the image and to select a focal plane of the image based on the measure of image quality. In some embodiments the controller is configured to move the image between a plurality of candidate focal planes while recording the measure of image quality, and to select the candidate focal plane for which the measure of image quality indicates the best image quality, relative to the other candidate focal planes, as the focal plane for the image. For example, in some embodiments, the computer generated hologram may comprise a hologram component arranged to perform a lens function, for example comprise lens data. The controller may be configured to move the image normal to the focal plane by changing the lens function or data.

There is provided a holographic projection system arranged to display information for a user. The projection system comprises a light receiving surface, a light source, a spatial light modulator, a holographic controller and a detector. The light source is arranged to output light. The spatial light modulator is arranged to receive the light from the light source and output spatially-modulated light in accordance with computer-generated holograms represented on the spatial light modulator to form an image on the light receiving surface. Each computer-generated hologram comprises a hologram component comprising data representative of a lens to affect the depth position at which the image is formed. The holographic controller is arranged to change the data representative of a lens to change the depth position. The data representative of a lens may also be referred to as a lensing function. The detector is arranged to determine the quality of the image, in a measurement region of the image, for a plurality of different focusing powers.

In some embodiments, there is provided a holographic controller (or processor) arranged to change the focusing power of the lensing function and a detector arranged to determine the quality of the image, in a measurement region of the image, for a plurality of different focusing powers. The holographic projection system may comprise such a processor or controller. As described above, the holographic data may include lensing data providing a lensing function which may, for example, simply be added to the holographic data representative of the image. The focusing or dioptric power of the lens represented by the lens data determines the position of the focal plane of the holographic reconstruction and thus the depth position of the reconstruction (images). It will be understood that the depth position of the image corresponds to a focal length, and hence a focusing power, of the lens simulated by the lens data/function, so that these concepts can be used interchangeably in this description.

The holographic controller is arranged to change the focusing power of the lensing function such that the distance from the spatial light modulator to the focal plane may be dynamically changed in software. In some embodiments, the detector assesses the quality of the holographic reconstruction for a plurality of different focusing powers of the lensing function. Accordingly, a feedback system is provided and the optimal focusing power of the lensing function may be determined. Specifically, the focusing power is determined at which the image on the screen is focused and the holographic reconstruction is formed at the light receiving surface. As can be understood from Figure 12, this occurs when the light field of the image is "cleanest" - for example, the light field exhibits maximum contrast or minimum noise. The detector is arranged to assess the quality of the image.

In some embodiments, a spatial light detector, such as a CCD-device or camera, is used to assess the quality of the image by, for example, visual inspection or image processing techniques known in the art. In some embodiments, the image quality is quantified as a quality measure, for example a measure of noise, smoothness, sharpness or contrast.

In other embodiments, the detector is a low field of view detector which does not have spatial resolution such as a photodiode. The detector may be an integrating detector. In these embodiments, the detector, e.g. photodiode, has a field of view smaller than the spatial extent of the image on the replay field. In some embodiments, the field of view of the detector on the screen has an area which is less than 20% the measurement area, optionally, less than 10%, further optionally, less than 5%. In some embodiments, the image is scanned across a photodiode and the time-varying signal received from the detector is assessed at each focusing power. In some embodiments, this is achieved by moving the image in the plane of the light receiving surface (i.e. in the focal plane or in a plane parallel to the light receiving surface or the focal plane) using holographic data. Again, as described above, the holographic data may include data providing a grating function which can be used to position the image in the plane of the screen. In some embodiments, the holographic controller is arranged to change the grating function in real-time to scan the image across the photodiode in real-time. In some embodiments, the image is moved in the plane of the screen at a constant speed. It may be understood that the holographic controller and detector may need to be synchronised. To associate a time point in the measured signal with a corresponding image position. The image may be moved in one direction on the image plane or two directions. The signal received from the non-spatial detector over time may contain information about noise, contrast and the like and the presence of interference fringes, for example, in each image and may be processed to extract respective measures of one or more of these quantities from the image, as known in the art. To this end, the time ordinate of the signal may be converted to a spatial coordinate either arbitrarily or using the synchronisation of image position in time.

In some embodiments, the processor is arranged to determine the image quality based on variations in the signal received from the detector as the image is moved in the plane of the screen. The pixels of the spatial light modulator have a size of a few microns and the image on the screen can therefore be moved in small increments during this feedback process. By comparing quality measures extracted from the time-varying signal obtained from the detector with different respective focusing powers of the lensing function, the focal plane closest to light receiving surface to can be identified as that where the best quality measure is obtained.

There is provided a system configured to measure image quality using a simple detector such as a fixed-position photodiode. There is further provided a software method for ensuring the image is focused on the screen using a simple detector. The image quality may be assessed by visual inspection or signal processing. In some embodiments, the image quality is quantified. As per other embodiments described herein, the detector may be fixed in position and arranged to measure the brightness of a fixed-size sub-region of the replay field which may be referred to as a measurement region.

In summary, some embodiments determine the focal length of the software lens which causes the image to be in focus on the light receiving surface - i.e. the focal length which means the light receiving surface is substantially at the focal plane. Notably, the same non-spatial detector (or detectors, if colour holography) may be used to perform all the closed-loop functions disclosed herein.

In some embodiments, the measure of image quality may be detected for all or a portion of the secondary region referred to in some of the embodiments above. In other embodiments, the measure may be detected anywhere in the image, irrespective of whether a secondary image region as described above is used.

The described embodiments employ a detector to detect light in the secondary image region. One example of an arrangement of such detector is now described in which a detector is disposed behind (along the optical axis) the light receiving surface . A lens is disposed between the light receiving surface and the detector. In particular, in some embodiments, as described above, the light receiving surface is a diffuser and the lens acts to concentrate, for example focus, light diffused by the diffuser onto the detector. In some embodiments, the lens may be omitted. In some embodiments, the detector (and lens where present) may be aligned with a cut-out in the light receiving surface or may be disposed next to the light receiving surface, away from the optical axis. In some embodiments, in particular those in which the lens is not present, the detector may be disposed in the plane of the light receiving surface , for example next to it or in a cut-out. In some embodiments, the detector (and lens if present) may be disposed in front of the detector. The detector may be a detector as described herein for any of the embodiments, for example as described above with reference to Figure 11. Similarly, in embodiments with multiple detectors, each may be disposed as described above. The detector or detectors, as the case may be may be a photo detector, for example Charge Coupled Device or Photo Multiplier Tube and may have an array of light sensitive elements to provide spatial resolution of the light falling on the area of the detector, for example in the form of an image sensor chip.

In some embodiments, the spatial light modulator is a phase-only spatial light modulator. These embodiments are advantageous because no optical energy is lost by modulating amplitude. Accordingly, an efficient holographic projection system is provided. However, the present disclosure may be equally implemented on an amplitude-only spatial light modulator or an amplitude and phase modulator. It may be understood that the hologram will be correspondingly phase-only, amplitude-only or fully-complex.

In some embodiments, the light source is a laser. In some embodiments, the light receiving surface is a screen or a diffuser. The holographic projection system of the present disclosure may be used to provide an improved head-up display (HUD) or head-mounted display. In some embodiments, there is provided a vehicle comprising the holographic projection system installed in the vehicle to provide a HUD. The vehicle may be a car, motorcycle, train, airplane, boat, or ship.

Although groups of embodiments have been largely disclosed separately, any feature of any embodiment or group of embodiments may be combined with any other feature or combination of features of any embodiment or group of embodiments. That is, all possible combinations and permutations of features disclosed in the present disclosure are envisaged.

The quality of the holographic reconstruction may be affect by the so-called zero order problem which is a consequence of the diffractive nature of using a pixelated spatial light modulator. Such zero-order light can be regarded as "noise" and includes for example specularly reflected light, and other unwanted light from the SLM.

In the example of Fourier holography, this "noise" is focussed at the focal point of the Fourier lens leading to a bright spot at the centre of the holographic reconstruction. The zero order light may be simply blocked out however this would mean replacing the bright spot with a dark spot. Some embodiments include an angularly selective filter to remove only the collimated rays of the zero order. Embodiments also include the method of managing the zero-order described in European patent 2,030,072.

Whilst some embodiments described herein include displaying one hologram per frame on the spatial light modulator, the present disclosure is by no means limited in this respect and more than one hologram may be displayed on the SLM at any one time. For example, embodiments implement the technique of "tiling", in which the surface area of the SLM is further divided up into a number of tiles, each of which is set in a phase distribution similar or identical to that of the original tile. Each tile is therefore of a smaller surface area than if the whole allocated area of the SLM were used as one large phase pattern. The smaller the number of frequency component in the tile, and respectively the larger the number of tiles, the further apart the reconstructed image areas are separated when the image is produced. The image may be created within the zeroth diffraction order, and it is preferred that the first and subsequent orders are displaced far enough so as not to overlap with the image and so that they may be blocked by way of a spatial filter.

As mentioned above, the holographic reconstruction produced by this method (whether with tiling or without) may comprise spots that can be referred to as image pixels. The higher the number of tiles used, the smaller these spots become. If one takes the example of a Fourier transform of an infinite sine wave, a single frequency is produced. This is the optimum output. In practice, if just one tile is used, this corresponds to an input of a single cycle of a sine wave, with a zero values extending in the positive and negative directions from the end nodes of the sine wave to infinity. Instead of a single frequency being produced from its Fourier transform, the principle frequency component is produced with a series of adjacent frequency components on either side of it. The use of tiling reduces the magnitude of these adjacent frequency components and as a direct result of this, less interference (constructive or destructive) occurs between adjacent image pixels, thereby improving the image quality. Preferably, each tile is a whole tile, although some embodiments use fractions of a tile.

In examples disclosed herein, three different colour light sources and three corresponding SLMs are used to provide composite colour. These examples may be referred to as spatially-separated colour, "SSC". In a variation encompassed by the present disclosure, the different holograms for each colour are displayed on different area of the same SLM and then combined to form the composite colour image. However, the skilled person will understand that at least some of the devices and methods of the present disclosure are equally applicable to other methods of providing composite colour holographic images.

One of these methods is known as Frame Sequential Colour, "FSC". In an example FSC system, three lasers are used (red, green and blue) and each laser is fired in succession at a single SLM to produce each frame of the video. The colours are cycled (red, green, blue, red, green, blue, etc.) at a fast enough rate such that a human viewer sees a polychromatic image from a combination of images formed by the three lasers. Each hologram is therefore colour specific. For example, in a video at 25 frames per second, the first frame would be produced by firing the red laser for 1/75th of a second, then the green laser would be fired for 1/75th of a second, and finally the blue laser would be fired for 1/75th of a second. The next frame is then produced, starting with the red laser, and so on. In FSC based embodiments, in addition to separating the light from the respective (or single) secondary image region for each colour by location or wavelengths, the separation can be achieved by exploiting the temporal separation of the component colour images if the detector has sufficient temporal resolution.

An advantage of FSC method is that the whole SLM is used for each colour. This means that the quality of the three colour images produced will not be compromised because all pixels on the SLM are used for each of the colour images. However, a disadvantage of the FSC method is that the overall image produced will not be as bright as a corresponding image produced by the SSC method by a factor of about 3, because each laser is only used for a third of the time. This drawback could potentially be addressed by overdriving the lasers, or by using more powerful lasers, but this would require more power to be used, would involve higher costs and would make the system less compact.

An advantage of the SSC method is that the image is brighter due to all three lasers being fired at the same time. However, if due to space limitations it is required to use only one SLM, the surface area of the SLM can be divided into three parts, acting in effect as three separate SLMs. The drawback of this is that the quality of each single-colour image is decreased, due to the decrease of SLM surface area available for each monochromatic image. The quality of the polychromatic image is therefore decreased accordingly. The decrease of SLM surface area available means that fewer pixels on the SLM can be used, thus reducing the quality of the image. The quality of the image is reduced because its resolution is reduced.

Examples describe illuminating the SLM with visible light but the skilled person will understand that the light sources and SLM may equally be used to direct infrared or ultraviolet light, for example, as disclosed herein. For example, the skilled person will be aware of techniques for converting infrared and ultraviolet light into visible light for the purpose of providing the information to a user. For example, the present disclosure extends to using phosphors and/or quantum dot technology for this purpose.

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

**Claims**

1. A holographic projection system (400) arranged to display information for a user in a primary image region (710) of a two-dimensional image (700) at a replay field (450), the projection system comprising:

    a light source (470) arranged to output light at a wavelength;
    a spatial light modulator (480) arranged to receive the light from the light source (470) and output spatially modulated light in accordance with a computer generated hologram encoded on the spatial light modulator (480) to form the two-dimensional image (700) at the replay field (450), wherein the image (700) comprises the primary image region (710) and a secondary image region (720) different from the primary image region (710);
    a detector (460) arranged to detect the optical power of the secondary image region (720) of the image (700); and
    a light controller arranged to change the optical power of the light output by the light source (470) in response to the detected optical power of the secondary image region (720) by applying a gain factor, G, to the drive input of the light source (470), wherein

    $$G = \frac{T}{P \times \frac{x}{y}}$$

    and T is the desired maximum luminance (cd/m$^2$) of the image (700), P is the luminance of the secondary image region (720) derived from the detected optical power, x is the total number of grey levels used in the image and y is the grey level of the light of the secondary image region.

2. A holographic projection system as claimed in claim 1 wherein the light controller is arranged to maintain the brightness of the primary image region (710) of the image (700) at a substantially constant value in response to the detected optical power of the secondary image region (720).

3. A holographic projection system as claimed in claim 1, wherein the light source (470) is a first light source, the light is first light, the wavelength is a first wavelength, the spatial light modulator (480) is a first spatial light modulator, the spatially modulated light is first spatially modulated light, the computer generated hologram is a first computer hologram, the image (700) is a first image, the replay field (450) is a first replay field, the primary image region (710) is a first primary image region, the secondary image region (720) is a first secondary image region and the detector (460) is a first detector, wherein the holographic projection system further comprises:

    a second light source (470') arranged to output second light at a second wavelength, wherein the second wavelength is different from the first wavelength of the light output by the light source; a second spatial light modulator (480') arranged to receive the second light from the second light source (470') and output second spatially modulated light in accordance with a second computer generated hologram encoded on the second spatial light modulator (480') to form a second two-dimensional image on the replay field (450), wherein the second image comprises: a second primary image region and a second secondary image region different from the second primary image region, and wherein the second primary region is substantially coincident with the first primary region to form a composite image; and
    a second detector arranged to detect the optical power of the second secondary image region of the second image.

4. A holographic projection system as claimed in claim 3, wherein the light controller is further arranged to change the optical power of the second light output by the second light source (470') in response to the detected optical power of the first secondary image region (720) of the first image (700) and the detected optical power of the second secondary image region of the second image to change the colour balance of the composite image, optionally, wherein the light controller is arranged to maintain the colour balance of the composite image at a substantially constant value in response to the detected optical power of the first secondary image region (720) of the first image (700) and the detected optical power of the second secondary image region of the second image.

5. A holographic projection system of claim 4 wherein the light controller is arranged to change the optical power of the light output by both the first and second light sources by applying a respective gain factor G to the drive input of both of the first and second light source, wherein

$$G = \frac{T}{P \times \frac{x}{y}}$$

and T is the desired maximum optical power of the respective image, P is the luminance of the secondary image region derived from the optical power detected by the respective detector, x is the total number of grey levels used in the respective image and y is the grey level of the light of the secondary image region of the respective image.

6. A holographic projection system as claimed in any preceding claim wherein the detector (460) is arranged to provide a non-linear electrical response to the optical power of the secondary image region (720) of the image (700).

7. A holographic projection system as claimed in any preceding claim comprising a diffuser at the replay field (450), wherein the detector (460) is disposed behind the diffuser along an optical path of the light between the spatial light modulator (480) and the diffuser

8. A holographic projection system as claimed in any of claims 1 to 6 comprising a diffuser at the replay field (450), wherein the detector (460) is disposed at the diffuser along an optical path of the light between the spatial light modulator (480) and the diffuser, next to the diffuser or in a cut-out in the diffuser.

9. A holographic projection system as claimed in claim 7, where the detector (460) is disposed behind a cut-out of the diffuser.

10. A holographic projection system as claimed in any one of claim 7 or 9 comprising a lens arranged in the light path to concentrate light onto the detector (460).

11. A holographic projection system as claimed in any preceding claim wherein the secondary image region (720) is spaced apart from the primary image region (710), for example disposed peripheral to the primary image region.

12. A holographic projection system as claimed in any preceding claim wherein the computer generated hologram corresponds to a mathematical transformation of the image, optionally, a Fourier or Fresnel transformation.

13. A holographic projection system as claimed in any preceding claim wherein the computer generated hologram comprises a second hologram component arranged to perform a lensing function.

14. A holographic projection system as claimed in any preceding claim wherein the spatial light modulator (480) is arranged to spatially modulate the phase and/or amplitude of the light from the light source (470).

15. A holographic projection system as claimed in any preceding claim wherein the projection system is a head-up display or a head-mounted display.

**Patentansprüche**

1. Holografisches Projektionssystem (400), das eingerichtet ist, um Informationen für einen Benutzer in einem primären Bildbereich (710) eines zweidimensionalen Bildes (700) in einem Wiedergabefeld (450) anzuzeigen, wobei das Projektionssystem umfasst:

eine Lichtquelle (470), die eingerichtet ist, Licht mit einer Wellenlänge abzugeben; einen räumlichen Lichtmodulator (480), der eingerichtet ist, das Licht von der Lichtquelle (470) zu empfangen und räumlich moduliertes Licht gemäß einem computergenerierten Hologramm abzugeben, das auf dem räumlichen Lichtmodulator (480) kodiert ist, um das zweidimensionale Bild (700) am Wiedergabefeld (450) zu bilden, wobei das Bild (700) den primären Bildbereich (710) und einen sekundären Bildbereich (720) umfasst, der sich von dem primären Bildbereich (710) unterscheidet; einen Detektor (460), der eingerichtet ist, um die optische Leistung des sekundären Bildbereichs (720) des Bildes (700) zu erfassen; und eine Lichtsteuerung, die angeordnet ist, um die optische Leistung des Lichts, das durch die Lichtquelle (470) abgegeben wird, als Reaktion auf die erfasste optische Leistung des sekundären Bildbereichs (720) zu ändern, indem sie einen Verstärkungsfaktor, G, auf den Ansteuerungseingang der Lichtquelle (470) anwendet, wobei

$$G = \frac{T}{P \times \frac{x}{y}}$$

und T die gewünschte maximale Leuchtdichte (cd/m$^2$) des Bildes (700) ist, P die Leuchtdichte des sekundären Bildbereichs (720) ist, die von der erfassten optischen Leistung abgeleitet ist, x die Gesamtzahl der im Bild verwendeten Graustufen ist und y die Graustufe des Lichts des sekundären Bildbereichs ist.

2. Holographisches Projektionssystem nach Anspruch 1, wobei die Lichtsteuerung eingerichtet ist, um die Helligkeit des primären Bildbereichs (710) des Bildes (700) als Reaktion auf die erfasste optische Leistung des sekundären Bildbereichs (720) auf einem im Wesentlichen konstanten Wert zu halten.

3. Holografisches Projektionssystem nach Anspruch 1, wobei die Lichtquelle (470) eine erste Lichtquelle ist, das Licht erstes Licht ist, die Wellenlänge eine erste Wellenlänge ist, der räumliche Lichtmodulator (480) ein erster räumlicher Lichtmodulator ist, das räumlich modulierte Licht ein erstes räumlich moduliertes Licht ist, das computergenerierte Hologramm ein erstes Computerhologramm ist, das Bild (700) ein erstes Bild ist, das Wiedergabefeld (450) ein erstes Wiedergabefeld ist, der primäre Bildbereich (710) ein erster primärer Bildbereich ist, der sekundäre Bildbereich (720) ein erster sekundärer Bildbereich ist und der Detektor (460) ein erster Detektor ist, wobei das holographische Projektionssystem weiter umfasst:

   eine zweite Lichtquelle (470'), die eingerichtet ist, um zweites Licht mit einer zweiten Wellenlänge abzugeben, wobei die zweite Wellenlänge von der ersten Wellenlänge des von der Lichtquelle abgegebenen Lichts verschieden ist;
   einen zweiten räumlichen Lichtmodulator (480'), der eingerichtet ist, um das zweite Licht von der zweiten Lichtquelle (470') zu empfangen und zweites räumlich moduliertes Licht gemäß einem zweiten computergenerierten Hologramm abzugeben, das auf dem zweiten räumlichen Lichtmodulator (480') kodiert ist, um ein zweites zweidimensionales Bild auf dem Wiedergabefeld (450) zu bilden, wobei das zweite Bild umfasst: einen zweiten primären Bildbereich und einen zweiten sekundären Bildbereich, der sich von dem zweiten primären Bildbereich unterscheidet, und wobei der zweite primäre Bereich im Wesentlichen mit dem ersten primären Bereich übereinstimmt, um ein zusammengesetztes Bild zu bilden; und
   einen zweiten Detektor, der eingerichtet ist, um die optische Leistung des zweiten sekundären Bildbereichs des zweiten Bildes zu erfassen.

4. Holographisches Projektionssystem nach Anspruch 3, wobei die Lichtsteuerung weiter eingerichtet ist, um die optische Leistung des zweiten Lichts zu ändern, das durch die zweite Lichtquelle (470') abgegeben wird, als Reaktion auf die erfasste optische Leistung des ersten sekundären Bildbereichs (720) des ersten Bildes (700) und der erfassten optischen Leistung des zweiten sekundären Bildbereichs des zweiten Bildes, um die Farbbalance des zusammengesetzten Bildes zu ändern, optional, wobei die Lichtsteuerung eingerichtet ist, um die Farbbalance des zusammengesetzten Bildes auf einem im Wesentlichen konstanten Wert zu halten als Reaktion auf die erfasste optische Leistung des ersten sekundären Bildbereichs (720) des ersten Bildes (700) und der erfassten optischen Leistung des zweiten sekundären Bildbereichs des zweiten Bildes.

5. Holografisches Projektionssystem nach Anspruch 4, wobei die Lichtsteuerung eingerichtet ist, um die optische Leistung des Lichts, dass sowohl von der ersten als auch der zweiten Lichtquelle abgegeben wird, zu ändern, indem ein entsprechender Verstärkungsfaktor G auf den Ansteuerungseingang der ersten und zweiten Lichtquelle angewendet wird, wobei

$$G = \frac{T}{P \times \frac{x}{y}}$$

und T die gewünschte maximale optische Leistung des jeweiligen Bildes ist, P die Leuchtdichte des sekundären Bildbereichs ist, der sich aus der vom jeweiligen Detektor erfassten optischen Leistung ableitet, x die Gesamtzahl der im jeweiligen Bild verwendeten Graustufen ist und y die Graustufe des Lichts des sekundären Bildbereichs des jeweiligen Bildes ist.

6. Holografisches Projektionssystem nach einem der vorstehenden Ansprüche, wobei der Detektor (460) eingerichtet ist, um eine nichtlineare elektrische Reaktion auf die optische Leistung des sekundären Bildbereichs (720) des Bildes (700) bereitzustellen.

7. Holografisches Projektionssystem nach einem der vorstehenden Ansprüche, umfassend einen Diffusor am Wiedergabefeld (450), wobei der Detektor (460) hinter dem Diffusor entlang eines optischen Pfades des Lichts zwischen dem räumlichen Lichtmodulator (480) und dem Diffusor angeordnet ist

8. Holografisches Projektionssystem nach einem der Ansprüche 1 bis 6, umfassend einen Diffusor am Wiedergabefeld (450), wobei der Detektor (460) am Diffusor entlang eines optischen Lichtweges zwischen dem räumlichen Lichtmodulator (480) und dem Diffusor, neben dem Diffusor oder in einem Ausschnitt im Diffusor angeordnet ist.

**9.** Holographisches Projektionssystem nach Anspruch 7, wobei der Detektor (460) hinter einem Ausschnitt des Diffusors angeordnet ist.

**10.** Holografisches Projektionssystem nach einem der Ansprüche 7 oder 9, umfassend eine Linse, die im Lichtweg angeordnet ist, um Licht auf den Detektor (460) zu konzentrieren.

**11.** Holografisches Projektionssystem nach einem der vorstehenden Ansprüche, wobei der sekundäre Bildbereich (720) von dem primären Bildbereich (710) beabstandet ist, beispielsweise peripher zum primären Bildbereich angeordnet.

**12.** Holographisches Projektionssystem nach einem der vorstehenden Ansprüche, wobei das computergenerierte Hologramm einer mathematischen Transformation des Bildes entspricht, optional einer Fourier- oder Fresnel-Transformation.

**13.** Holographisches Projektionssystem nach einem der vorstehenden Ansprüche, wobei das computergenerierte Hologramm eine zweite Hologramm-Komponente umfasst, die eingerichtet ist, um eine Linsenfunktion auszuführen.

**14.** Holografisches Projektionssystem nach einem der vorstehenden Ansprüche, wobei der räumliche Lichtmodulator (480) eingerichtet ist, um die Phase und/oder Amplitude des Lichts von der Lichtquelle (470) räumlich zu modulieren.

**15.** Holografisches Projektionssystem nach einem der vorstehenden Ansprüche, wobei das Projektionssystem ein Head-up-Display oder ein Head-Mounted-Display ist.


**Revendications**

**1.** Système de projection holographique (400) agencé pour afficher des informations pour un utilisateur dans une zone d'image primaire (710) d'une image bidimensionnelle (700) à un champ de lecture (450), le système de projection comprenant :

une source de lumière (470) agencée pour délivrer une lumière à une longueur d'onde ;
un modulateur spatial de lumière (480) agencé pour recevoir la lumière provenant de la source de lumière (470) et délivrer une lumière modulée dans l'espace en fonction d'un hologramme généré par ordinateur et transmis au modulateur spatial de lumière (480) pour former l'image bidimensionnelle (700) au niveau du champ de lecture (450), dans lequel l'image (700) comprend la zone d'image primaire (710) et une zone d'image secondaire (720) différente de la zone d'image primaire (710) ;
un détecteur (460) agencé pour détecter la puissance optique de la zone d'image secondaire (720) de l'image (700) ; et
un organe de commande de lumière agencé pour changer la puissance optique de la lumière délivrée par la source de lumière (470) en réponse à la puissance optique détectée de la zone d'image secondaire (720) en appliquant un facteur de gain, G, à l'entrée de pilotage de la source de lumière (470), dans lequel

$$G = \frac{T}{P \times \frac{x}{y}}$$

et T est la luminance maximale souhaitée (cd/m$^2$) de l'image (700), P est la luminance de la zone d'image secondaire (720) dérivée de la puissance optique détectée, x est le nombre total de niveaux de gris utilisés dans l'image et y est le niveau de gris de la lumière de la zone d'image secondaire.

**2.** Système de projection holographique selon la revendication 1, dans lequel l'organe de commande de lumière est agencé pour maintenir la luminosité de la zone d'image primaire (710) de l'image (700) à une valeur sensiblement constante en réponse à la puissance optique détectée de la zone d'image secondaire (720).

**3.** Système de projection holographique selon la revendication 1, dans lequel la source de lumière (470) est une première source de lumière, la lumière est une première lumière, la longueur d'onde est une première longueur d'onde, le modulateur spatial de lumière (480) est un premier modulateur spatial de lumière, la lumière modulée dans l'espace est une première lumière modulée dans l'espace, l'hologramme généré par ordinateur est un premier hologramme généré par ordinateur, l'image (700) est une première image, le champ de lecture (450) est un premier champ de lecture, la zone d'image primaire (710) est une première zone d'image primaire, la zone d'image secondaire (720) est une première zone d'image secondaire et le détecteur (460) est un premier détecteur, dans lequel le système de projection holographique comprend en outre :

une deuxième source de lumière (470') agencée pour délivrer une deuxième lumière à une deuxième longueur d'onde, dans lequel la deuxième longueur d'onde est différente de la première longueur d'onde de la lumière délivrée par la source de lumière ;

un deuxième modulateur spatial de lumière (480') agencé pour recevoir la deuxième lumière émanant de la deuxième source de lumière (470') et délivrer une deuxième lumière dans l'espace en fonction d'un deuxième hologramme généré par ordinateur codé sur le deuxième modulateur spatial de lumière (480') pour former une deuxième image bidimensionnelle sur le champ de lecture (450), dans lequel la deuxième image comprend : une deuxième zone d'image primaire et une deuxième zone d'image secondaire différente de la deuxième zone d'image primaire, et dans lequel la deuxième zone primaire coïncide sensiblement avec la première zone d'image primaire pour former une image composite ; et
un deuxième détecteur agencé pour détecter la puissance optique de la deuxième zone d'image secondaire de la deuxième image.

4. Système de projection holographique selon la revendication 3, dans lequel l'organe de commande de lumière est en outre agencé pour changer la puissance optique de la deuxième lumière délivrée par la deuxième source de lumière (470') en réponse à la puissance optique détectée de la première zone d'image secondaire (720) de la première image (700) et à la puissance optique détectée de la deuxième zone d'image secondaire de la deuxième image pour changer l'équilibre chromatique de l'image composite, facultativement, dans lequel l'organe de commande de lumière est agencé pour maintenir l'équilibre chromatique de l'image composite à une valeur sensiblement constante en réponse à la puissance optique détectée de la première zone d'image secondaire (720) de la première image (700) et à la puissance optique détectée de la deuxième zone d'image secondaire de la deuxième image.

5. Système de projection holographique selon la revendication 4, dans lequel l'organe de commande de lumière est agencé pour changer la puissance optique de la lumière délivrée à la fois par les première et deuxième sources lumineuses en appliquant un facteur de gain respectif G à l'entrée de pilotage à la fois des première et deuxième sources lumineuses, dans lequel

$$G = \frac{T}{P \times \frac{x}{y}}$$

et T est la puissance optique maximale souhaitée de l'image respective, P est la luminance de la zone d'image secondaire dérivée de la puissance optique détectée par le détecteur respectif, x est le nombre total de niveaux de gris utilisés dans l'image respective et y est le niveau de gris de la lumière de la zone d'image secondaire de l'image respective.

6. Système de projection holographique selon l'une quelconque des revendications précédentes, dans lequel le détecteur (460) est agencé pour fournir une réponse électrique non linéaire à la puissance optique de la zone d'image secondaire (720) de l'image (700).

7. Système de projection holographique selon l'une quelconque des revendications précédentes, comprenant un diffuseur au niveau du champ de lecture (450), dans lequel le détecteur (460) est disposé derrière le diffuseur le long d'une voie optique de la lumière entre le modulateur spatial de lumière (480) et le diffuseur.

8. Système de projection holographique selon l'une quelconque des revendications 1 à 6, comprenant un diffuseur au niveau du champ de lecture (450), dans lequel le détecteur (460) est disposé au niveau du diffuseur le long d'une voie optique de la lumière entre le modulateur spatial de lumière (480) et le diffuseur, à côté du diffuseur ou dans une découpe dans le diffuseur.

9. Système de projection holographique selon la revendication 7, dans lequel le détecteur (460) est disposé derrière une découpe du diffuseur.

10. Système de projection holographique selon l'une quelconque des revendications 7 et 9, comprenant une lentille agencée dans la voie lumineuse pour concentrer une lumière sur le détecteur (460).

11. Système de projection holographique selon l'une quelconque des revendications précédentes, dans lequel la zone d'image secondaire (720) est espacée de la zone d'image primaire (710), par exemple disposée de manière périphérique par rapport à la zone d'image primaire.

12. Système de projection holographique selon l'une quelconque des revendications précédentes, dans lequel l'hologramme généré par ordinateur correspond à une transformation mathématique de l'image, facultativement, une transformation de Fourier ou de Fresnel.

13. Système de projection holographique selon l'une quelconque des revendications précédentes, dans lequel l'hologramme généré par ordinateur comprend un deuxième composant d'hologramme agencé pour réaliser une fonction de lentille.

14. Système de projection holographique selon l'une quelconque des revendications précédentes, dans lequel le modulateur spatial de lumière (480) est agencé pour moduler dans l'espace la phase et/ou l'amplitude de la lumière émanant de la source de lumière (470).

15. Système de projection holographique selon l'une quelconque des revendications précédentes, dans lequel le système de projection est un affichage tête haute ou un visiocasque.

FIGURE 1

230

210

203  201

250

205

254  252

209  207

256

213  211

FIGURE 2A

FIGURE 2B

306
307
305
304
303
301
301a

308

302a

302

FIGURE 3

FIGURE 4

511

541　　　　　　　561

543　　　　563

530　　550　　570

580　　560

520

501

521

FIGURE 5

FIGURE 6

700

710

720

FIGURE 7

FIGURE 8

FIGURE 9

FIGURE 10

1150

1110

1120

1130

FIGURE 11

FIGURE 12

**EP 3 408 710 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012008181 A1
- US 2009103151 A1
- GB 2498170 A
- GB 2501112 A
- EP 2030072 A